# EUROPÄISCHE PATENTANMELDUNG

(11) **EP 1 443 353 A2**
(43) Veröffentlichungstag der Anmeldung: **04.08.2004**
(21) Anmeldenummer: 04100339.3
(22) Anmeldetag: 30.01.2004
(51) Int. Cl.: G02B 21/16, G02B 21/22

(54) **Mikroskop mit einer Beleuchtung**

(30) Priorität: 31.01.2003 DE 10303825
(71) Anmelder: Leica Microsystems (Schweiz) AG, 9445 Heerbrugg (CH)
(72) Erfinder: D VERIN, Jacques, 9443, Widnau (CH)
(74) Vertreter: Reichert, Werner F., Dr.

(57) **Zusammenfassung**

Die Erfindung betrifft ein Stereomikroskop mit einer doppelten, symmetrisch angeordneten UV-Beleuchtungseinrichtung (20a, 20b), wobei die Beleuchtungsstrahlengänge (10a, 10b) durch eine kombinierte Umlenkanordnung (21), bestehend aus einem Umlenkprisma (5) für den Beleuchtungsstrahle ngang (3) einer herkömmlichen Beleuchtung (19) und zwei symmetrisch angeordneten Umlenkelementen (12a, b) für die Beleuchtungsstrahlengänge (10a, 10b) der doppelten UV-Beleuchtungseinrichtung (20a, 20b), geführt ist.

## Beschreibung

Die Erfindung betrifft ein Mikroskop mit einer Beleuchtung. Insbesondere beschäftigt sich die Erfindung mit einer Fluoreszenz-Beleuchtung (UV-Beleuchtung) für ein Stereomikroskop. Unter Fluoreszenz-Beleuchtung versteht man eine Beleuchtung mittels eines Lichts im ultravioletten Wellenlängenbereich, mit deren Hilfe sich bei einer sogenannten Fluoreszenz-Beobachtung des zu betrachtenden Objekts erweiterte Beobachtungs- und Analysemöglichkeiten ergeben.

Dem Fachmann sind in erster Linie UV-Beleuchtungseinheiten bekannt, welche seitlich und schräg am Mikroskopkörper oder darüber angeordnet sind. Die wesentlichen Nachteile solcher Anordnungen sind jedoch, dass solche Beleuchtungseinheiten einen großen Platzbedarf beanspruchen und weiterhin dadurch, dass die Beleuchtung schräg - jedenfalls nicht koaxial zu dem oder den Hauptstrahlengängen des Mikroskops (der optischen Achse des Mikroskops entsprechend) - erfolgt und somit ein "Schatten" bildendes, inhomogenes Beleuchtungsfeld erzeugt.

Demzufolge wurden Beleuchtungseinheiten geschaffen, welche seitwärts mittels unterhalb des Hauptobjektivs positionierten Umlenkelementen eingespiegelt werden. Diese Anordnungen sind in der Lage, dank einer guten koaxialen Ausrichtung zum Hauptstrahlengang des Mikroskops ein homogen ausgeleuchtetes Betrachtungsfeld zu liefern. Nachteilig ist hierbei jedoch, dass die Arbeitsdistanz - also der Abstand zwischen dem untersten Mikroskopteil und dem Objekt - durch den Platzbedarf der seitlich angeordneten Beleuchtungseinheiten und vor allem durch die Umlenkelemente unterhalb des Hauptobjektivs inakzeptabel reduziert wird.

Eine insoweit verbesserte Lösung ist bereits in der DE-A1-197 39 428 vorgestellt worden. Die Umlenkung des Beleuchtungsstrahlengangs erfolgt hierbei mittels eines Umlenkspiegels, welcher oberhalb oder auf Höhe des Hauptobjektivs angeordnet ist und den Beleuchtungsstrahlengang durch eine Aussparung des Hauptobjektivs lenkt. Unterhalb des Hauptobjektivs sind einschwenkbar ein "Meniskus", d.h. ein optisches Zusatzelement mit positiver Brechkraft, sowie ein Filter vorgesehen. Auf diese Art ist eine annähernd koaxiale Beleuchtung bei weniger stark beeinträchtigter Arbeitsdistanz möglich. Nachteilig bleiben hierbei jedoch die komplizierte Ausbildung des Hauptobjektivs und eine nach wie vor einseitige Beleuchtung mit der Möglichkeit zur Schattenbildung.

Somit stellte sich dem Erfinder die Aufgabe, eine verbesserte UV-Beleuchtung zu fi nden, welche die genannten Nachteile nicht mehr aufweist. Auch sollte die neue Beleuchtungsart für andere Lichtquellen ebenfalls so verwendbar sein und dabei auch Verbesserungen bringen.

Diese Aufgabe wird durch die Verwendung von zwei Beleuchtungsstrahlengängen gelöst, welche über ein kombiniertes Umlenkelement einer herkömmlichen Beleuchtung geleitet werden. Hierfür werden an dem Umlenkprisma der normalen koaxialen Beleuchtung seitlich zwei Umlenkelemente - vorzugsweise symmetrisch - angebracht. Auf diese Weise bleibt der Vorteil einer herkömmlichen koaxialen Beleuchtung erhalten, ohne die Arbeitsdistanz zu reduzieren. Des Weiteren ist durch die Anbri ngung von zwei zusätzlichen Beleuchtungsstrahlengängen nicht nur eine stärkere Ausleuchtung, sondern darüber hinaus auch eine wesentlich homogenere Ausleuchtung garantiert. Dieses rührt daher, dass eine gute Koaxialität aller Beleuchtungsstrahlengänge zur optischen Achse des Mikroskops realisiert ist und zusätzlich auch für jede Pupille ein separater (nämlich vorzugsweise der jeweils gegenüberliegende) Beleuchtungsstrahl in einem optimalen Ausfallswinkel zur Verfügung steht. Dieses ist optimiert, wenn die beiden Beleuchtungsstrahlengänge symmetrisch angeordnet sind.

Die beiden bevorzugt symmetrisch am Umlenkprisma einer herkömmlichen Beleuchtung angeordneten Umlenkelemente können Spiegel oder Prismen mit verspiegelter Kittfläche sein. Die Spiegel können ein Planspiegel oder auch ein Hohlspiegel mit Brechkraft sein. Die Prismen können einfache Prismen ohne Brechkraft sein. Sie können auch eine oder mehrere Flächen mit Brechkraft aufweisen.

Bei den bevorzugten Ausgestaltungen des Umlenkelements als ein optisches Element mit Brechkraft wirkt das Umlenkelement wie eine Feldlinse, die die Abbildung einer Feldblende der UV-Beleuchtung durch das Hauptobjektiv ermöglicht. Dadurch wird eine bessere Begrenzung des Leuchtfeldes am Objekt erreicht (Köhler-Beleuchtung).

Des Weiteren liegen aber auch solche Ausgestaltungsvarianten der Erfindung im Offenbarungsrahmen der Anmeldung, bei welchen die Umlenkelemente selbst keine Brechkraft aufweisen. Dort sorgen das Objektiv und/oder sonstige zusätzliche optische Elemente für optimale Projektion in die Objektebene.

Der Winkel zwischen der optischen Achse der Hauptbeleuchtung und denen der seitlich angeordneten Beleuchtungsstrahlengänge beträgt in einer bevorzugten Ausgestaltung etwa 90 Grad; andere Anordnungen liegen aber ebenfalls im Ra hmen der Offenbarung dieser Anmeldung.

Lichtquellen im Sinne dieser Anmeldung sollen auch einzelne Lichtleiter oder Faserbündel oder einzelne Fasern sein, die ursprüng lich aus einer einzigen Beleuc htungsquelle stammen, weil die mehrfachen Einbringungsorte des Lichts erfindungswesentlich sind.

Weitere Ausbildungen der Erfindung sind in den Figuren und in den abhängigen Patentansprüchen angegeben. Die Bezugszeichenliste ist Bestandteil der Offenbarung.

Anhand von schematischen Figuren wird die Erfindung symbolisch und beispielhaft näher erläutert.

Die Figuren werden zusammenhängend und übergreifend beschrieben. Gleiche Bezugszeichen bedeuten gleiche Bauteile, Bezugszeichen mit unterschiedlichen Indices geben funktionsgleiche Bauteile an.

Es zeigen dabei:
- Fig. 1a:: den Aufbau einer bekannten Beleuchtungseinrichtung für ein Stereomikroskop in Draufsicht;
- Fig. 1b:: den Aufbau aus Fig. 1a in Seitenansicht;
- Fig. 2a:: einen erfind ungsgemäßen Aufbau mit einer kombinierten Umlenkanordnung und zwei seitlichen UV-Beleuchtungsanordnungen in Draufsicht;
- Fig. 2b:: die Anordnung der Fig. 2a in Seitenansicht;
- Fig. 2c:: die Anordnung der Fig. 2a bzw. Fig. 2b aus der Richtung der Lichtquelle 2 her betrachtet, wobei Umlenkelemente vergrößert dargestellt sind und als Umlenkelemente Spiegel verwendet werden, und
- Fig. 3:: die Anordnung der Fig. 2a bzw. Fig.2b aus der Richtung der Lichtquelle 2 her betrachtet, wobei als Umlenkelemente anstelle der Spiegel Prismen angeordnet sind.

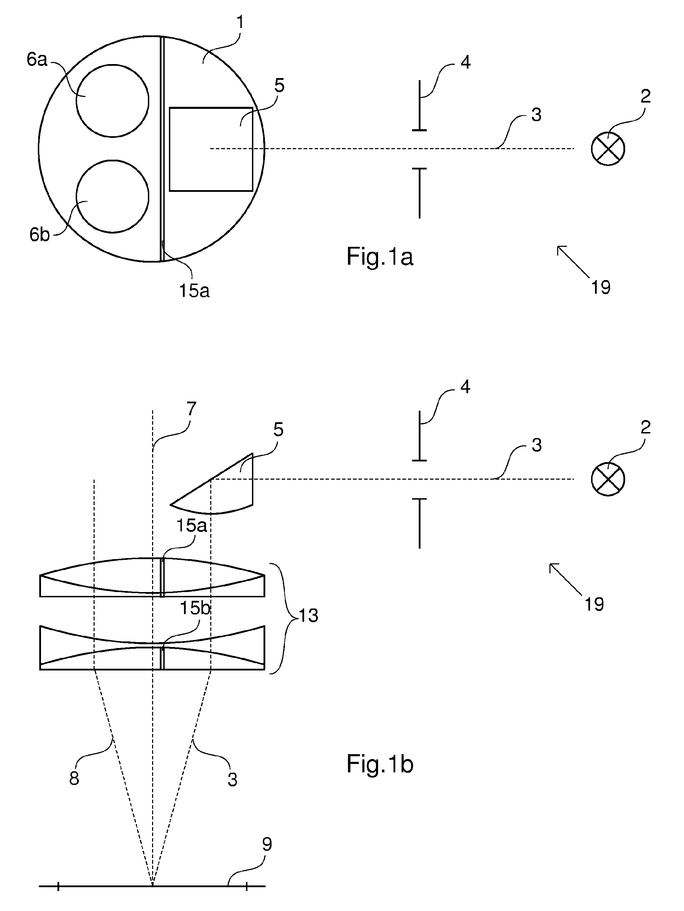

In Fig. 1a und 1b ist zur Veranschaulichung des Standes der Technik der Aufbau einer Beleuchtungsvorrichtung für ein Stereomikroskop dargestellt. Hierbei ist ein Mikroskopkörper 1 in einer Schnittdarstellung in Draufsicht dargestellt. Man erkennt, dass der Mikroskopkörper 1 von der Trennwand 15a in einen Teil getrennt ist, in dem die Mikroskoppupillen 6a und 6b angeordnet sind, und in einen Teil, wo das Umlenkprisma 5 angeordnet ist. Der Beleuchtungsstrahlengang, dargestellt durch die optische Achse 3, wird von der Lichtquelle 2 erzeugt und von der Feldblende 4 wird eine Abbildung mittels des Umlenkprismas 5 und des Hauptobjektiv-Ensembles 13 auf das Objektfeld 9 projiziert.

In Fig. 1b ist ersichtlich, dass das Umlenkprisma 5 zwecks einer besseren Definition des Leuchtfeldes mit Brechkraft ausgestattet ist. Dadurch wirkt das Umlenkelement 5 wie eine Feldlinse, die die Abbildung der Feldblende 4 durch das Hauptobjektiv-Ensemble 13 ermöglicht. Der Beleuchtungsstrahlengang, dargestellt durch die optische Achse 3, ist auf das Zentrum des Objektfeldes 9 ausgerichtet, welches gleichzeitig auf der optischen Achse des Hauptobjektiv-Ensembles 13 liegt. Von dort aus wird der Beleuchtungsstrahlengang - dargestellt durch die optische Achse 3 - von dem Beobachtungsstrahlengang - dargestellt durch die optische Achse 8 des Mikroskops - aufgenommen und durch die nicht mehr dargestellten Mikroskoppupillen 6a und 6b geführt.

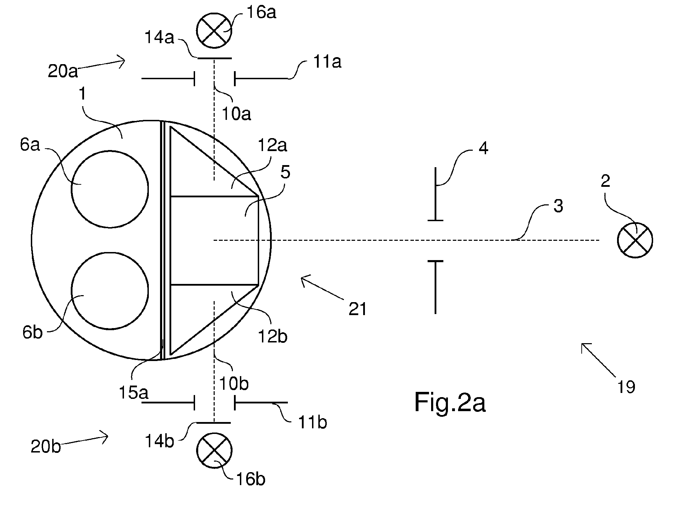

Fig. 2a zeigt, wie eine erfindungsgemäße UV-Beleuchtungsanordnung aufgebaut ist. Hierbei sind zusätzlich zu der herkömmlichen Beleuchtung gemäß Fig. 1a und Fig. 1b zwei seitlich angeordnete Beleuchtungen 16a und 16b vorgesehen, von welchen mittels der Filter 14a bzw. 14b der Nicht-UV-Wellenlängenbereich gesperrt wird. Der so erzeugte UV-Beleuchtungsstrahlengang - dargestellt durch die optischen Achsen 10a bzw. 10b - passiert die jeweiligen Irisblenden 11a bzw. 11b und wird von den Umlenkelementen 12a bzw. 12b auf das - in dieser Ansicht nicht dargestellte - Objektfeld 9 umgelenkt.

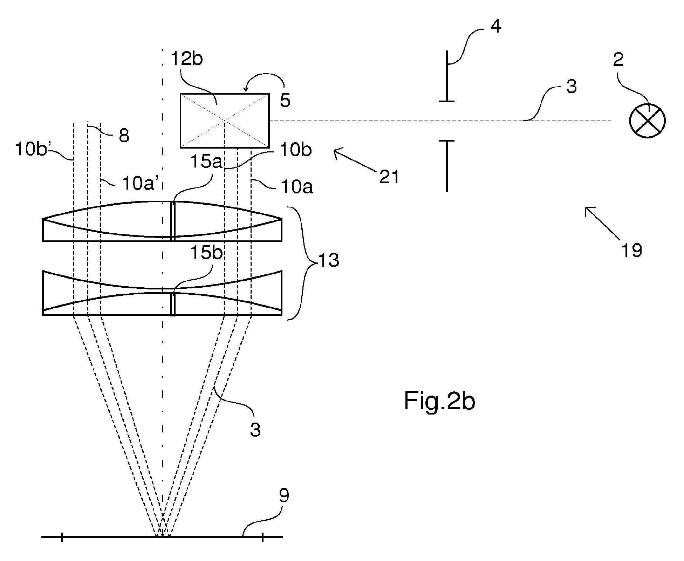

Fig. 2b zeigt eine Seitenansicht des in Fig. 2a vorgestellten Aufbaus, welcher die seitlich angeordneten UV-Beleuchtungen 16 nicht darstellt.

Die entsprechenden Strahlengänge 10a und 10b sind zur besseren Veranschaulichung nebeneinander dargestellt, obwohl sie kollimiert sind und sich - aus dieser Seitenansicht gesehen - überlagern.

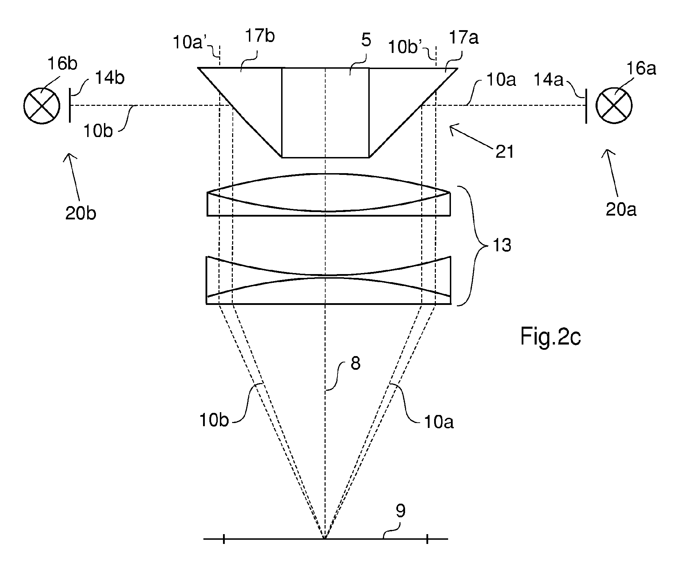

Fig. 2c zeigt eine um 90 Grad nach rechts gedrehte Ansicht des in Fig. 2b gezeigten Aufbaus, d.h. man betrachtet den Aufbau aus der Richtung der optischen Achse 3 der hier nicht dargestellten Beleuchtungseinrichtung 19 mit normaler Beleuchtung. Hierbei wird deutlich, dass die Umlenkelemente 17a und 17b symmetrisch als Spiegel für das Umlenken der Strahlengänge 10a und 10b der UV-Beleuchtungseinrichtungen 20a bzw. 20b ausgebildet sind. Aus diesem Blickwinkel wird auch deutlich, dass der rechte Beleuc htungsstrahlengang 10a als reflektierter Beobachtungsstrahlengang 10a' die gegenüber liegende - hier nicht darstellbare - Mikroskoppupille 6b, vgl. Fig. 2a, optimal koaxial versorgen kann. Für den Beleuchtungsstrahle ngang 10b gilt das Gleiche vice versa. Die Umlenkelemente haben aufgrund ihrer aus Platzgründen beschnittenen Form eine pyramiden-ähnliche Erstreckung.

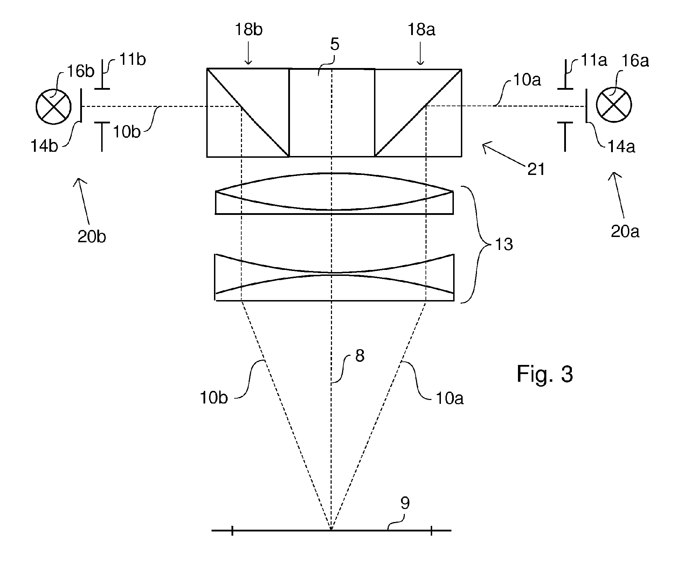

In Fig. 3 ist eine Ausgestaltungsvariante mit Prismen 18a, b mit Brechkraft vo rgestellt und demzufolge auch mit Irisblenden 11 a, b.

### Bezugszeichenliste

- 1 -: Mikroskopkörper
- 2 -: Lichtquelle für herkömmliche Beleuchtung
- 3 -: optische Achse der herkömmlichen Beleuchtung
- 4 -: Feldblende für herkömmliche Beleuchtung
- 5 -: Umlenkprisma mit Brechkraft
- 6a, b -: Mikroskoppupille(n)
- 7 -: optische Achse des Hauptobjektivs
- 8 -: optische Achse des Mikroskops
- 9 -: Objektfeld
- 10a, b -: optische Achse(n) der UV-Beleuchtung
- 10a', b' -: optische Achse(n) des reflektierten Beobachtungsstrah lengangs
- 11a, b -: Irisblende(n)
- 12a, b -: Umlenkelement(e)
- 13 -: Hauptobjektiv-Ensemble
- 14a, b -: Filter
- 15a, b -: Trennwand/Trennwände
- 16a, b -: Lichtquelle(n) UV-Beleuchtung
- 17a, b -: Spiegel
- 18a, b -: Prisma/Prismen mit Brechkraft
- 19 -: Beleuchtungseinrichtung für herkömmliche Beleuchtung
- 20a, b -: UV-Beleuchtungseinrichtung(en)
- 21 -: Umlenkanordnung

## Patentansprüche

1. Mikroskop mit einer Beleuchtungseinrichtung (20a) an einer Seite des Mikroskops zur Einblendung eines Beleuchtungsstrahlengangs (10a), **dadurch gekennzeichnet, dass** zusätzlich zu der Beleuchtungseinrichtung (20a) eine zweite Beleuchtungseinrichtung (20b) an einer anderen Seite des Mikroskops zur Einblendung eines zweiten Beleuchtungsstrahlengangs (10b) mit gleicher Lichtfrequenz angeordnet ist.

2. Mikroskop nach Anspruch 1, **dadurch gekennzeichnet, dass** wenigstens eine dritte Beleuchtungseinrichtung (19) mit einem Beleuchtungsstrahle ngang (3) angeordnet ist.

3. Mikroskop nach einem der vorhergehenden Ansprüche, **dadurch gekennzeichnet, dass** die Beleuchtungseinrichtungen (20a, 20b) UV-Beleuchtungseinrichtungen sind.

4. Mikroskop nach Anspruch 3, **dadurch gekennzeichnet, dass** die Beleuchtungsstrahlengänge (10a, 10b) der UV-Beleuchtungseinrichtungen (20a, 20b) zu der optischen Achse (8) des Mikroskops koaxial ausgerichtet sind.

5. Mikroskop nach einem der vorhergehenden Ansprüche, **dadurch gekennzeichnet, dass** die UV-Beleuchtungseinrichtungen (20a, 20b) zueinander symmetrisch angeordnet sind.

6. Mikroskop nach einem der vorhergehenden Ansprüche, **dadurch gekennzeichnet, dass** die Umlenkelemente (12a, 12b) für die Beleuchtungsstrahlengänge (10a, 10b) der UV-Beleuchtungseinrichtungen (20a, 20b) oberhalb des Hauptobjektivs (13) angeordnet sind.

7. Mikroskop nach einem der vorhergehenden Ansprüche, **dadurch gekennzeichnet, dass** die Umlenkelemente (12a, 12b) für die Beleuchtungsstrahlengänge (10a, 10b) der UV-Beleuchtungseinrichtungen (20a, 20b) auf Höhe des Umlenkprismas (5) für den Beleuchtungsstrahlengang (3) der Beleuchtung (19) angeordnet sind.

8. Mikroskop nach einem der vorhergehenden Ansprüche, **dadurch gekennzeichnet, dass** die Umlenkelemente (12a, 12b) für die Beleuchtungsstrahlengänge (10a, 10b) der UV-Beleuchtungseinrichtungen (20a, 20b) eine Umlenkanordnung (21) bilden.

9. Mikroskop nach einem der vorhergehenden Ansprüche, **dadurch gekennzeichnet, dass** die Umlenkanordnung (21) mehrstückig aus einzelnen Umlenkelementen (5, 12a, 12b) gebildet ist.

10. Mikroskop nach einem der vorhergehenden Ansprüche, **dadurch gekennzeichnet, dass** die Umlenkanordnung (21) einstückig aus einem kombinierten Umlenkelement gebildet ist.

11. Mikroskop nach einem der vorhergehenden Ansprüche, **dadurch gekennzeichnet, dass** wenigstens ein Teil der Umlenkelemente (5, 12a, 12b) der Umlenkanordnung (21) als Umlenkelemente mit Brechkraft ausgebildet sind.

12. Mikroskop nach einem der vorhergehenden Ansprüche, **dadurch gekennzeichnet, dass** die Umlenkelemente (5, 12a, 12b) der Umlenkanordnung (21) wahlweise mit oder ohne Brechkraft austauschbar ausgebildet sind.

13. Mikroskop nach einem der vorhergehenden Ansprüche, **dadurch gekennzeichnet, dass** die Umlenkelemente (12a, 12b) für die Beleuchtungsstrahlengänge (10a, 10b) der UV-Beleuchtungseinrichtungen (20a, 20b) als Spiegel - vorzugsweise als Hohlspiegel (17a, 17b) - ausgebildet sind.

14. Mikroskop nach einem der vorhergehenden Ansprüche, **dadurch gekennzeichnet, dass** die Umlenkelemente (12a, 12b) für die Beleuchtungsstrahlengänge (10a, 10b) der UV-Beleuchtungseinrichtungen (20a, 20b) jeweils als Prisma (18a, 18b) ausgebildet sind.

15. Mikroskop nach einem der vorhergehenden Ansprüche, **dadurch gekennzeichnet, dass** der Winkel zwischen der optischen Achse (3) der Beleuchtungseinrichtung (19) und den optischen Achsen (10a, 10b) der seitlich angeordneten UV-Beleuchtungseinrichtungen (20a, 20b) jeweils etwa 90 Grad beträgt.

16. Mikroskop nach einem der vorhergehenden Ansprüche, **dadurch gekennzeichnet, dass** der Winkel zwischen der optischen Achse (3) der Beleuchtungseinrichtung (19) und den optischen Achsen (10a, 10b) der seitlich angeordneten UV-Beleuchtungs einrichtungen (20a, 20b) jeweils ei nen Wert zwischen Null und 180 Grad beträgt.

17. Mikroskop nach einem der vorhergehenden Ansprüche, **dadurch gekennzeichnet, dass** es ein Stereomikroskop ist.

18. Mikroskop nach einem der vorhergehenden Ansprüche, **dadurch gekennzeichnet, dass** es ein Operationsmikroskop ist.

19. Mikroskop nach einem der vorhergehenden Ansprüche mit einer Durchlichtbeleuchtungseinrichtung, **dadurch gekennzeichnet, dass** die Durchlichtbeleuchtungseinrichtung unterhalb eines Objektträgers Umlenkelemente und die Beleuchtungsstrahlengänge aufweist, so dass ein Anwender zwischen verschiedenen Durchlichtbeleuchtungs-Arten wählen kann.
